# EUROPÄISCHE PATENTSCHRIFT

(11) **EP 3 589 476 B1**
(45) Veröffentlichungstag und Bekanntmachung des Hinweises auf die Patenterteilung: **14.04.2021**
(21) Anmeldenummer: 18706285.6
(22) Anmeldetag: 27.02.2018
(51) Int. Cl.: B29C 64/118, B29C 64/209, B33Y 30/00

(54) **DRUCKKOPF, VERFAHREN UND SYSTEM FÜR DEN 3D-DRUCK MIT VARIABLER AUSTRAGSRATE**
PRINT HEAD, METHOD AND SYSTEM FOR 3D PRINTING WITH VARAIBLE DISPENSING RATE
TÊTE D'IMPRESSION, PROCÉDÉ ET SYSTÈME D'IMPRESSION 3D AVEC DÉBIT VARIABLE

(30) Priorität: 28.02.2017 EP 17158281
(43) Veröffentlichungstag der Anmeldung: 08.01.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); AKBAS, Levent, 58455 Witten (DE); DEGIORGIO, Nicolas, 47807 Krefeld (DE); KÜNZEL, Jonas, 51381 Leverkusen (DE)
(74) Vertreter: Levpat
(86) Internationale Anmeldenummer: PCT/EP2018/054791
(87) Internationale Veröffentlichungsnummer: WO 2018/158239

(56) Entgegenhaltungen:
- WO-A1-2016/020150
- US-A1- 2014 070 461

## Beschreibung

Die vorliegende Erfindung betrifft einen Druckkopf für ein additives Schmelzschichtungsverfahren mit einem thermoplastischen Aufbaumaterial, umfassend mindestens einen Eingang zur Aufnahme eines Aufbaumaterials in den Druckkopf hinein; mindestens einen nach dem Eingang angeordneten und mit dem Eingang wenigstens zeitweise fluidisch verbundenen Schmelzbereich zum Aufschmelzen des Aufbaumaterials und mindestens einen mit dem Schmelzbereich wenigstens zeitweise fluidisch verbundenen ersten Ausgang zum Austragen von aufgeschmolzenem Aufbaumaterial mit einer ersten Austragsrate aus dem Schmelzbereich. Die Erfindung betrifft weiterhin ein Verfahren zur Herstellung eines Gegenstands in einem additiven Schmelzschichtungsverfahren unter Einsatz eines solchen Druckkopfs und ein System für ein additives Schmelzschichtungsverfahren mit einem thermoplastischen Aufbaumaterial, umfassend solchen einen Druckkopf und eine Steuerungseinheit.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) oder Schmelzschichtungsverfahren beispielsweise wird ein thermoplastisches Kunststoff-Filament verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ein frühes Patentdokument für diese Technologie ist US 5,121,329. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Es kann vorkommen, dass eine Schicht des aufzubauenden Gegenstands mehrere nicht miteinander verbundene Bereiche aufweist. Dann müssen in einem FDM-Verfahren das Ablegen des geschmolzenen Filaments unterbrochen, der Druckkopf repositioniert und anschließend das Ablegen des geschmolzenen Filaments wieder gestartet werden.

Üblicherweise wird das strangförmige Aufbaumaterial durch einen Rollenantrieb oder dergleichen in den Schmelzbereich des Druckkopfes befördert. Das noch nicht aufgeschmolzene Material wirkt wie ein Stempel für das aufgeschmolzene Material, so dass die Austragsrate des aufgeschmolzenen Materials über den Antrieb für das Einführen des noch nicht aufgeschmolzenen Materials gesteuert werden kann. Dieser Ansatz hat den Vorteil, dass der Druckkopf einfach konstruiert werden kann. Nachteilig ist jedoch, dass das Anhalten der Filamentextrusion einzig durch das Anhalten des Eintragens von nicht aufgeschmolzenem Aufbaumaterial erfolgen kann. Hierdurch steigt die Gefahr, dass während des Repositionierens des Druckkopfes weiterhin Material aus dem Druckkopf austritt und somit für einen gelungenen 3D-Druck nicht akzeptable Materialfäden zwischen der Endposition des Druckkopfes und der neuen Anfangsposition des Druckkopfes verbleiben.

Selbst wenn ein Verschlussmechanismus am heißen Ausgang ("hot end") des Druckkopfes das Austreten von Material während des Repositionierens verhindern sollte, verbleibt noch ein weiteres Problem: das Ansteigen des Innendrucks im Schmelzbereich des Druckkopfes bei der Wiederaufnahme der Materialablage. Durch diesen Druckanstieg kann anfangs ungewollt eine zu große Menge an geschmolzenem Aufbaumaterial austreten.

Ein zusätzlicher Aspekt bei FDM-Verfahren ist weiterhin die Verweilzeit des aufgeschmolzenen Materials in der Aufschmelzzone. Wenn ein thermoplastisches Polymer übermäßig lange oberhalb einer bestimmten Temperatur gehalten wird, steigt die Gefahr von Kettenfragmentierungen und oder Vernetzung und damit einer Beeinträchtigung der Verarbeitungseigenschaften und mechanischen Eigenschaften des Polymers.

Sogenannte Umlaufextruder zirkulieren aufgeschmolzenes Material, wodurch Druckschwankungen am Ausgang des Extruders verringert werden können. Ein Beispiel hierfür wird in US 4,642,040 A beschrieben.

Ein weiteres Beispiel für eine kurze Verweilzeit des aufgeschmolzenen Materials in der Austragszone des Druckkopfes ist in WO 2012/135279 A1 offenbart. Ein additives Herstellungssystem zur Drucken einer Schokoladenpraline umfasst eine Platte, eine Rezirkulierungsschleife zum Zirkulieren von Schokoladenmaterial und zum Temperieren des Schokoladenmaterials. Ein Druckkopf ist eingerichtet, um wenigstens einen Teil des Schokoladenmaterials aus der Rezirkulierungsschleife zu empfangen und um das Schokoladenmaterial zu extrudieren und auf der Platte abzulegen. Auf der Basis von Befehlen einer Steuerungseinheit wird wenigstens ein Teil der Schokolade gedruckt.

WO 2016/020150 A1 beschreibt eine Granulatkörner/Flüssigkeitsflusseinstellvorrichtung für von Granulatkörnern und/oder Flüssigkeiten gespeiste 3-D Druckerköpfe, angeordnet in einem über einen Kanal gespeisten 3-D Druckerkopf, wobei der Druckerkopf eine Kammer umfasst, wobei die Kammer eine Fläche aufweist und diese Fläche mindestens eine Austrittsbohrung aufweist. Gemäß der Offenbarung ist innerhalb der Kammer mindestens eine Schnecke angeordnet, die das Material, bevorzugter Weise Kunststoff, der mindestens einen Austrittsbohrung zuführt und die Schnecke durch eine Kraft in Richtung der Fläche beaufschlagt ist und der Abstand zwischen Schnecke und der Fläche (26) durch den Druck des Materials eingestellt wird.

Erfindungsgemäß vorgeschlagen wird ein Druckkopf gemäß Anspruch 1, ein Verfahren gemäß Anspruch 7 und ein System gemäß Anspruch 12. Vorteilhafte Ausgestaltungen sind in den Unteransprüchen angegeben. Sie können beliebig kombiniert werden, sofern sich aus dem Kontext nicht eindeutig das Gegenteil ergibt.

Ein erfindungsgemäßer Druckkopf für ein additives Schmelzschichtungsverfahren mit einem thermoplastischen Aufbaumaterial umfasst:
- mindestens einen Eingang zur Aufnahme eines Aufbaumaterials in den Druckkopf hinein;
- mindestens einen nach dem Eingang angeordneten und mit dem Eingang wenigstens zeitweise fluidisch verbundenen Schmelzbereich zum Aufschmelzen des Aufbaumaterials;
   und
- mindestens einen mit dem Schmelzbereich wenigstens zeitweise fluidisch verbundenen ersten Ausgang zum Austragen von aufgeschmolzenem Aufbaumaterial mit einer ersten Austragsrate aus dem Schmelzbereich;
wobei
- der Druckkopf weiterhin mindestens einen mit dem Schmelzbereich wenigstens zeitweise fluidisch verbundenen zweiten Ausgang zum Austragen von aufgeschmolzenem oder nicht aufgeschmolzenem Aufbaumaterial mit einer zweiten Austragsrate aus dem Schmelzbereich umfasst;
- die erste Austragsrate durch einen ersten Austragsraten-Beeinflusser für das geschmolzene Aufbaumaterial beeinflussbar ist und
- der erste Austragsraten-Beeinflusser als schaltbares Ventil ausgebildet ist, welches eingerichtet ist, um den Schmelzbereich und den ersten Ausgang fluidisch miteinander zu verbinden oder voneinander zu trennen.

Der erfindungsgemäße Druckkopf hat den Vorteil, dass die Verweilzeit von geschmolzenem Aufbaumaterial in der Schmelzzone minimiert werden kann und gleichzeitig der Druck innerhalb der Schmelzzone geringeren Schwankungen unterworfen ist. Dieses ist besonders vorteilhaft, wenn bei einer Repositionierung des Druckkopfs der Materialaustrag angehalten werden soll. Auf diese Weise lässt sich die Genauigkeit des Materialaustrags bei der Wiederaufnahme des Druckvorgangs erhöhen.

Der Druckkopf ist in einem additiven Schmelzschichtungsverfahren einsetzbar. Insbesondere handelt es sich dabei um FDM-Verfahren. Grundsätzlich kann das Aufbaumaterial alle thermoplastischen Polymere enthalten. Bevorzugt sind solche, die bei einer längeren thermischen Belastung deutlich ihre Eigenschaften durch thermische Kettenaustauschprozesse (Umesterung, Umurethanisierung, Umaddierung, etc.) innerhalb von Polymerketten, aber auch zwischen unterschiedlichen Polymerketten, verändern. Solche Thermoplaste profitieren besonders von gut kontrollierten Verarbeitungszeiten, Beispielhaft sein genannt thermoplastische Polyester, Polycarbonate, Polyamide und Polyurethane, insbesondere thermoplastische Polyurethane und thermoplastische Polyurethan-Elastomere.

Zur Aufnahme des beispielsweise filament- oder granulatförmigen Aufbaumaterials weist der Druckkopf einen Eingang auf. Nach dem Passieren des Eingangs gelangt das Aufbaumaterial in einen Schmelzbereich, wo es aufgeschmolzen wird. Der Eingang ist zumindest zeitweise fluidisch verbunden mit dem Schmelzbereich. Ist eine vorübergehende fluidische Trennung gewünscht, kann dieses unter anderem durch ein Ventil oder einen Kolben erreicht werden.

Das aufgeschmolzene Aufbaumaterial kann durch einen ersten Ausgang aus dem Druckkopf ausgetragen werden. Dieser erste Ausgang ist mit dem Schmelzbereich zumindest zeitweise, beispielsweise durch ein steuerbares Ventil, fluidisch verbunden. Wenn die fluidische Verbindung unterbrochen wird, tritt kein geschmolzenes Aufbaumaterial aus dem ersten Ausgang aus. Der erste Ausgang ist dazu vorgesehen, Aufbaumaterial zur Herstellung des gewünschten Gegenstandes im Schmelzschichtungsverfahren auszutragen. Die Menge des pro Zeiteinheit den ersten Ausgang verlassenden geschmolzenen Aufbaumaterials wird mit der ersten Austragsrate, beispielsweise in der Einheit Milligramm pro Sekunde, ausgedrückt.

Die erste Austragsrate ist durch einen ersten Austragsraten-Beeinflusser für das geschmolzene Aufbaumaterial beeinflussbar. Geeignet sind alle Vorrichtungen, mit denen mittelbar oder unmittelbar die Rate des Materialaustrags aus dem ersten Ausgang heraus gesteuert werden kann.

Der Druckkopf weist ferner einen zweiten Ausgang auf, welcher mit dem Schmelzbereich zumindest zeitweise fluidisch verbunden ist. Material tritt aus ihm mit einer zweiten Austragsrate aus. Dieser Ausgang ist im Gegensatz zum ersten Ausgang nicht dafür vorgesehen, dass aus ihm austretendes Material zum Aufbau des gewünschten Gegenstands beiträgt. Der zweite Ausgang kann vielmehr Druckentlastungs-Ausgang fungieren, wenn kein Material den ersten Ausgang verlassen soll.

Die erste Austragsrate und die zweite Austragsrate können jede für sich Null betragen, jedoch nicht gleichzeitig. Es ist bevorzugt, dass die Summe aus erster und zweiter Austragsrate einen konstanten Wert einnimmt.

Es ist weiterhin vorgesehen, dass der erste Austragsraten-Beeinflusser als schaltbares Ventil ausgebildet, welches eingerichtet ist, um den Schmelzbereich und den ersten Ausgang fluidisch miteinander zu verbinden oder voneinander zu trennen. Dieses kann auf Anweisung einer Steuerungseinheit, in Übereinstimmung mit dem Druckvorgang für die jeweilige Schicht, erfolgen.

Ausführungsformen und weitere Aspekte der Erfindung werden nachfolgend beschrieben. Sie können beliebig kombiniert werden, sofern sich aus dem Kontext nicht eindeutig das Gegenteil ergibt.

In einer bevorzugten Ausführungsform ist die zweite Austragsrate durch einen zweiten Austragsraten-Beeinflusser für das aufgeschmolzene Aufbaumaterial beeinflussbar, wobei der zweite Austragsraten-Beeinflusser als schaltbares Ventil ausgebildet ist, welches eingerichtet ist, um den Schmelzbereich und den zweiten Ausgang fluidisch miteinander zu verbinden oder voneinander zu trennen. Dann ist die zweite Austragsrate nicht nur indirekt über den ersten Austragsraten-Beeinflusser, sondern direkt steuerbar. Dieses kann auf Anweisung einer Steuerungseinheit, in Übereinstimmung mit dem Druckvorgang für die jeweilige Schicht, erfolgen.

In einer weiteren bevorzugten Ausführungsform ist der zweite Ausgang wenigstens zeitweise mit dem Eingang fluidisch verbunden. Hierdurch kann nicht zum Aufbau des Gegenstands verwendetes Material wiederverwendet werden.

In einer weiteren bevorzugten Ausführungsform ist der erste Ausgang in Form einer Mehrzahl von koaxialen, voneinander beabstandeten Einzelausgängen ausgestaltet und die Einzelausgänge sind so eingerichtet, dass durch jeden Einzelausgang aufgeschmolzenes oder nicht aufgeschmolzenes Aufbaumaterial mit der gleichen Austragsrate ausgetragen wird. Auf diese Weise kann eine Parallelisierung des 3D-Druckvorgangs erfolgen. Der Abstand eines Einzelausgangs zu seinem nächsten Nachbarn wird zweckmäßigerweise so gewählt, dass er größer als die größte Breite des parallel zu druckenden Gegenstands ist. Es können 2, 3, 4, 5, 6, 7, 8, 9 oder noch mehr Einzelausgänge vorliegen. Es ist möglich, dass die Einzelausgänge in zwei Dimensionen und zueinander versetzt angeordnet sind und dass der Abstand der Mittelpunkte zweier benachbarter Einzelausgänge kleiner oder gleich dem Durchmesser des zweiten Ausgangs ist. Die Anordnung der Einzelausgänge ist vorzugsweise in versetzten Reihen. Dieses ermöglicht das effiziente Ablegen von Aufbaumaterial auf große Flächen.

In einer weiteren bevorzugten Ausführungsform ist zusätzlich zum ersten Ausgang wenigstens ein weiterer mit dem ersten Ausgang koaxialer Ausgang mit einem separat ansteuerbaren Austragsraten-Beeinflusser vorgesehen, durch welchen aufgeschmolzenes Aufbaumaterial mit einer Austragsrate ausgetragen werden kann. Es können 1, 2, 3, 4, 5, 6, 7, 8, 9 oder noch mehr solcher individuell ansteuerbaren weiteren Ausgänge vorliegen. Die einzelnen Ausgänge können den gleichen Öffnungsquerschnitt oder aber auch unterschiedliche Öffnungsquerschnitte aufweisen.

Ein weiterer Aspekt der vorliegenden Erfindung ist ein Verfahren zur Herstellung eines Gegenstandes in einem additiven Schmelzschichtungsverfahren, umfassend die Schritte:
I) Auftragen eines Filaments eines zumindest teilweise geschmolzenen Aufbaumaterials mittels eines Druckkopfes auf einen Träger, so dass eine Lage des Aufbaumaterials erhalten wird, welche einem ersten ausgewählten Querschnitt des Gegenstands entspricht;
II) Auftragen eines Filaments des zumindest teilweise geschmolzenen Aufbaumaterials mittels eines Druckkopfes auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
III) Wiederholen des Schritts II), bis der Gegenstand gebildet ist;
wobei das Aufbaumaterial ein schmelzbares Polymer aufweist;
wobei das Auftragen des Filaments wenigstens in Schritt II) durch einen erfindungsgemäßen Druckkopf erfolgt, indem geschmolzenes Aufbaumaterial mit einer ersten Austragsrate aus dem ersten Ausgang des Druckkopfes ausgetragen wird;
und vor, während und/oder nach der Durchführung eines Schrittes II) eine Steuereinheit kontrolliert, ob der Druckkopf ohne Austragen von geschmolzenem Aufbaumaterial repositioniert werden muss und, falls dieses der Fall ist, vor der Repositionierung den ersten Austragsraten-Beeinflusser des Druckkopfs derart ansteuert, dass die erste Austragsrate Null beträgt und die zweite Austragsrate größer als Null ist und nach der Repositionierung den ersten Austragsraten-Beeinflusser des Druckkopfs derart ansteuert, dass die erste Austragsrate Null größer als Null ist.

Im erfindungsgemäßen Verfahren wird ein Gegenstand schichtweise aufgebaut. Insofern handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für das Auftragen durchgeführt werden.

Ein elektronisches Modell des zu bildenden Gegenstands liegt zweckmäßigerweise in einem CAD-Programm vor. Das CAD-Programm kann dann Querschnitte des Modells berechnen, die durch Auftragen des Filaments zu Querschnitten des Gegenstands werden.

Die einzelnen Filamente, welche aufgetragen werden, können einen Durchmesser von ≥ 25 µm bis ≤ 5000 µm aufweisen.

Schritt I) des Verfahrens betrifft den Aufbau der ersten Lage auf einen Träger. Anschließend wird so lange Schritt II) ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen.

Die Temperatur, mit der das zumindest teilweise geschmolzen Aufbaumaterial aufgetragen wird, liegt vorzugsweise mindestens 10° C oberhalb der Schmelztemperatur und vorzugsweise < 200° C oberhalb der oberen Temperatur des Schmelzbereichs des schmelzbaren Polymers.

Neben dem schmelzbaren Polymer kann das Aufbaumaterial noch weitere Additive wie Füllstoffe, Stabilisatoren und dergleichen, aber auch weitere Polymere, enthalten. Der Gesamtgehalt an Additiven im Aufbaumaterial kann beispielsweise ≥ 0,1 Gewichts-% bis ≤ 80 Gewichts-%, bevorzugt ≥ 0,5 Gewichts-% bis ≤ 50 Gewichts-%, betragen.

Im erfindungsgemäßen Verfahren ist vorgesehen, dass wenigstens in Schritt II), vorzugsweise während des gesamten Verfahrens, das Auftragen des Filaments durch einen erfindungsgemäßen Druckkopf erfolgt. Hierbei wird (entsprechend dem jeweils ausgewählten Querschnitt des Gegenstands) geschmolzenes Aufbaumaterial mit einer ersten Austragsrate aus dem ersten Ausgang des Druckkopfes ausgetragen.

Eine Steuereinheit kontrolliert während der Durchführung des erfindungsgemäßen Verfahrens, ob der Druckkopf repositioniert werden muss. Dieses kann beim Wechsel zur nächsten Schicht des Gegenstands der Fall sein oder wenn eine Schicht des Gegenstands mehrere nicht miteinander verbundene Bereiche aufweist. Bei herkömmlichen FDM-Druckverfahren würde nun der Filamentantrieb angehalten werden und beim Erreichen der neuen Druckkopfposition wieder in Gang gesetzt werden. Dieses hat den Nachteil, dass das Aufbaumaterial unnötig lange in der Schmelzzone verbleibt und beim Wiederanfahren des Filamentantriebs ein plötzlicher Druckanstieg im Druckkopf für eine ungewollt hohe anfängliche Austragsrate sorgen kann.

Im erfindungsgemäßen Verfahren wird stattdessen auf Anweisung der Steuereinheit im Druckkopf die erste Austragsrate auf Null heruntergefahren, so dass aus dem ersten Ausgang kein Material mehr austritt. Stattdessen wird die zweite Austragsrate auf einen Wert größer als Null gesetzt, so dass im Druckkopf bewegtes Material anstatt durch den ersten nun aus dem zweiten Ausgang heraustritt. Dann kann der Materialfördermechanismus im Druckkopf ohne Unterbrechung arbeiten. Es ist bevorzugt, dass die Summe aus erster und zweiter Austragsrate für die Dauer des erfindungsgemäßen Verfahrens einen konstanten Wert einnimmt. Nach der Repositionierung kann dann wieder Material aus dem ersten Ausgang zum weiteren Aufbau des Gegenstands ausgetragen werden.

In einer bevorzugten Ausführungsform des Verfahrens bleibt die erste Austragsrate für ≥ 25% der Gesamtzeit des Verfahrens innerhalb eines Intervalls von ± 20%, vorzugsweise ± 10%, mehr bevorzugt ± 5% um einen vorbestimmten Wert.

In einer weiteren bevorzugten Ausführungsform des Verfahrens bleibt der Materialdurchsatz durch den Druckkopf für ≥ 50%, bevorzugt ≥ 75%, mehr bevorzugt ≥ 95% der Gesamtzeit des Verfahrens konstant. Der Materialdurchsatz durch den Druckkopf ist hierbei als die Summe aller Austragsraten zu verstehen. Durch einen konstanten Materialdurchsatz können Aufheizung und Materialfluss im Druckkopf besser koordiniert werden. Der Begriff "konstant" schließt in diesem Fall eine Schwankung um ± 10%, bevorzugt ± 5%, um einen vorbestimmten Wert ein.

In einer weiteren bevorzugten Ausführungsform des Verfahrens weicht für ≥ 25% der Gesamtzeit des Verfahrens der durch das geschmolzene Aufbaumaterial ausgeübte Druck innerhalb des Schmelzbereichs um ≤ 50% vom durchschnittlichen durch das geschmolzene Aufbaumaterial innerhalb des Schmelzbereichs ausgeübten Druck ab.

In einer weiteren bevorzugten Ausführungsform des Verfahrens beträgt die mittlere Verweilzeit des geschmolzenen Aufbaumaterials innerhalb des Schmelzbereichs ≤ 3 Minuten. Vorzugsweise beträgt diese mittlere Verweilzeit ≤ 2 Minuten, mehr bevorzugt ≤ 1 Minute. Das gemessene Verweilzeitprofil kann einer Funktion mit einem Vertrauensintervall von > 0,9 nach wiederholten, statistisch verteilten Messungen von jeweils < 20 Minuten (bevorzugt < 10 Minuten) innerhalb der Bauzeit entsprechen.

In einer weiteren bevorzugten Ausführungsform des Verfahrens wird ein erfindungsgemäßer Druckkopf eingesetzt, in dem zusätzlich zum ersten Ausgang wenigstens ein weiterer mit dem ersten Ausgang koaxialer Ausgang mit einem separat ansteuerbaren Austragsraten-Beeinflusser vorgesehen ist, durch welchen aufgeschmolzenes Aufbaumaterial mit einer Austragsrate ausgetragen wird und es wird jeder Austragsraten-Beeinflusser separat angesteuert.

Die vorliegende Erfindung betrifft weiterhin ein System für ein additives Schmelzschichtungsverfahren mit einem thermoplastischen Aufbaumaterial, umfassend einen Druckkopf und eine Steuerungseinheit, wobei der Druckkopf ein erfindungsgemäßer Druckkopf ist und die Steuerungseinheit eingerichtet ist, um ein erfindungsgemäßes Verfahren ablaufen zu lassen.

Die vorliegende Erfindung wird anhand der nachfolgenden Figuren näher erläutert, ohne jedoch darauf beschränkt zu sein. Es zeigen:
FIG. 1 einen erfindungsgemäßen Druckkopf
FIG. 2-4 erfindungsgemäße Systeme mit Druckkopf und Steuerungseinheit

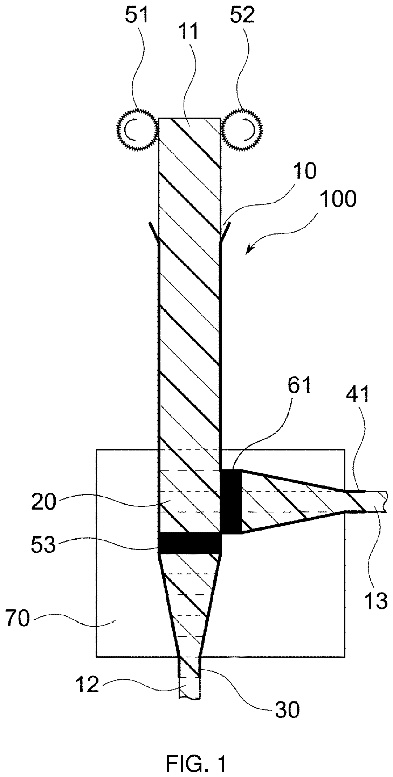

Der oder die Austragsraten-Beeinflusser sind als schaltbare Ventile ausgebildet. Dieses ist schematisch in FIG. 1 gezeigt. Der Druckkopf 100 weist einen Eingang 10 auf, durch den das Aufbaumaterial 11, angetrieben durch die Antriebswalzen 51 und 52, in den Schmelzbereich 20 gelangt. Das Heizelement 70 führt die zum Aufschmelzen des Aufbaumaterials nötige Wärme in den Schmelzbereich 20 ein. Das Austreten von geschmolzenem Aufbaumaterial 12 aus dem ersten Ausgang 30 heraus wird durch das schaltbare Ventil 53 beeinflusst. Optional kann als zweiter Austragsraten-Beeinflusser zum Beeinflussen der Rate, mit der geschmolzenes Aufbaumaterial 13 aus dem zweiten Ausgang 41 austritt, ein weiteres schaltbares Ventil 61 vorgesehen sein. Die Ansteuerung der schaltbaren Ventile 53, 61 übernimmt eine nicht abgebildete Steuerungseinheit.

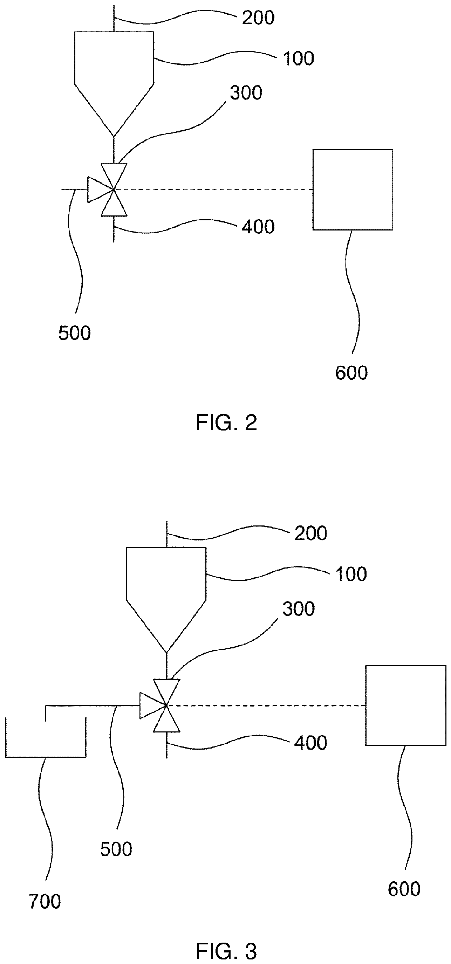

FIG. 2 zeigt schematisch ein erfindungsgemäßes System mit dem Zusammenwirken von Druckkopf und Steuerungseinheit. Der Druckkopf 100 empfängt in seinem Aufschmelzbereich den Stoffstrom 200, welcher insbesondere ein Filament eines thermoplastischen Polymers sein kann. Im Aufschmelzbereich wird das thermoplastische Polymer aufgeschmolzen. Der Stoffstrom des aufgeschmolzenen Materials verlässt den Aufschmelzbereich und tritt in ein Dreiwegeventil 300 ein. Das Dreiwegeventil 300 ist in der Terminologie der Erfindung sowohl der erste Austragsraten-Beeinflusser und der zweite Austragsraten-Beeinflusser. Dieses Dreiwegeventil 300 wird durch die Steuerungseinheit 600 angesteuert und kann auf Anweisung dieser Steuerungseinheit 600 den Stoffstrom des aufgeschmolzenen Materials auf die Stoffströme 400 und/oder 500 umleiten. Falls gewünscht, kann das Dreiwegeventil 300 auch den eintretenden Stoffstrom blockieren, so dass kein Material aus dem Dreiwegeventil 300 austritt. Der Stoffstrom 400 ist als derjenige Stoffstrom vorgesehen, welcher den durch das additive Schmelzschichtungsverfahren herzustellenden Gegenstand bildet. Der Stoffstrom 500 nimmt nicht am additiven Schmelzschichtungsverfahren teil.

Durch die Möglichkeit des Aufteilens des eintretenden Stoffstroms auf die beiden Stoffströme 400 und 500 kann der in das Dreiwegeventil 300 eintretende Stoffstrom mit einer konstanten Rate den Aufschmelzbereich des Druckkopfes verlassen. Soll Material zum Aufbau des herzustellenden Gegenstands abgelegt werden, schaltet die Steuerungseinheit 600 das Dreiwegeventil 300 so, dass beispielsweise 100% des eintretenden Stoffstroms das Ventil über Stoffstrom 400 verlassen.

Wenn stattdessen der Druckkopf eine neue Position relativ zum aufzubauenden Gegenstand einnehmen soll und auf dem Weg dorthin kein Material abgelegt werden soll, schalten die Steuerungseinheit 600 das Dreiwegeventil 300 so, dass beispielsweise 100% des eintretenden Stoffstroms das Ventil über Stoffstrom 500 verlassen und entsprechend nicht auf dem aufzubauenden Gegenstand abgelegt werden.

Hätte der Druckkopf diese Möglichkeit nicht, müsste vor dem Umpositionieren der Stoffstrom 200 angehalten werden und bei Wiederaufnahme der Materialablage erneut angefahren werden. Hierbei würden jedoch Druckschwankungen im Druckkopf auftreten, die für eine mengenmäßig kontrollierte Abgabe des geschmolzenen Materials nicht förderlich sind. Diese Probleme vermeidet die vorliegende Erfindung.

Das Dreiwegeventil 300 ist nicht darauf beschränkt, 100% des eintretenden Stoffstroms auf Stoffstrom 400 oder auf Stoffstrom 500 umzuleiten. Es können auch beliebige Abstufungen der Verhältnisse der Stoffströme 400 und 500 zueinander eingenommen werden. Dieses ist vorteilhaft, wenn sich der Druckkopf beim Drucken von feinen Strukturen nur langsam relativ zum aufzubauenden Gegenstand bewegt und dementsprechend wenig Material abgelegt werden soll. Auch hier lassen sich unerwünschte Drucksprünge innerhalb des Druckkopfs vermeiden.

FIG. 3 zeigt schematisch ein weiteres erfindungsgemäßes System mit dem Zusammenwirken von Druckkopf und Steuerungseinheit. Aufbauend auf dem System gemäß FIG. 5 ist dargestellt, wie der nicht zum Aufbau des herzustellenden Gegenstands im additiven Schmelzschichtungsverfahren vorgesehene Stoffstrom 500 in einen Auffangbehälter 700 geleitet wird. Das im Auffangbehälter 700 gesammelte Material kann einer Wiederverwendung zugeführt werden.

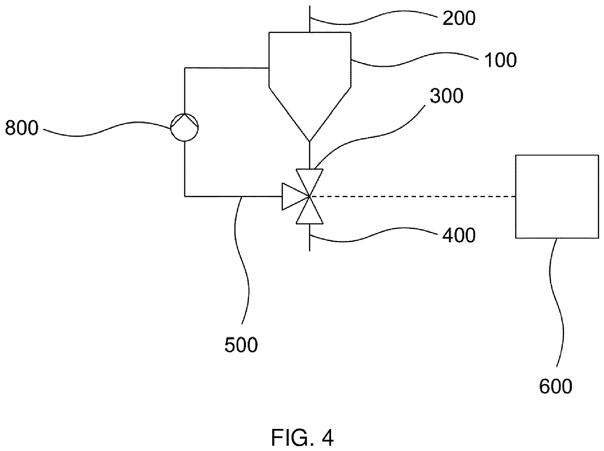

FIG. 4 zeigt schematisch ein weiteres erfindungsgemäßes System mit dem Zusammenwirken von Druckkopf und Steuerungseinheit. Aufbauend auf dem System gemäß FIG. 5 ist dargestellt, wie der nicht zum Aufbau des herzustellenden Gegenstands im additiven Schmelzschichtungsverfahren vorgesehene Stoffstrom 500 wieder in den Aufschmelzbereich zurückgeführt wird. Dieses kann durch eine optionale Pumpe 800 unterstützt werden. Um ein Erstarren des Materials zu verhindern, können die Leitungen für den Stoffstrom 500 thermisch isoliert und/oder beheizt werden.

## Patentansprüche

1. Druckkopf (100) für ein additives Schmelzschichtungsverfahren mit einem thermoplastischen Aufbaumaterial, umfassend:
- mindestens einen Eingang (10) zur Aufnahme eines Aufbaumaterials (11) in den Druckkopf hinein;
- mindestens einen nach dem Eingang (10) angeordneten und mit dem Eingang (10) wenigstens zeitweise fluidisch verbundenen Schmelzbereich (20) zum Aufschmelzen des Aufbaumaterials (11);
und
- mindestens einen mit dem Schmelzbereich (20) wenigstens zeitweise fluidisch verbundenen ersten Ausgang (30) zum Austragen von aufgeschmolzenem Aufbaumaterial (12) mit einer ersten Austragsrate aus dem Schmelzbereich (20);
wobei
- der Druckkopf (100) weiterhin mindestens einen mit dem Schmelzbereich (20) wenigstens zeitweise fluidisch verbundenen zweiten Ausgang (41) zum Austragen von aufgeschmolzenem oder nicht aufgeschmolzenem Aufbaumaterial (11, 13) mit einer zweiten Austragsrate aus dem Schmelzbereich (20) umfasst;
- die erste Austragsrate durch einen ersten Austragsraten-Beeinflusser für das geschmolzene Aufbaumaterial (12) beeinflussbar ist ; **dadurch gekennzeichnet, dass**
- der erste Austragsraten-Beeinflusser als schaltbares Ventil (53) ausgebildet ist, welches eingerichtet ist, um den Schmelzbereich (20) und den ersten Ausgang (30) fluidisch miteinander zu verbinden oder voneinander zu trennen.

2. Druckkopf gemäß Anspruch 1, **dadurch gekennzeichnet, dass** die zweite Austragsrate durch einen zweiten Austragsraten-Beeinflusser für das aufgeschmolzene Aufbaumaterial (13) beeinflussbar ist, wobei der zweite Austragsraten-Beeinflusser als schaltbares Ventil (61) ausgebildet ist, welches eingerichtet ist, um den Schmelzbereich (20) und den zweiten Ausgang (41) fluidisch miteinander zu verbinden oder voneinander zu trennen.

3. Druckkopf gemäß Anspruch 1 oder 2, **dadurch gekennzeichnet, dass** der zweite Ausgang (41) wenigstens zeitweise mit dem Eingang (10) fluidisch verbunden ist.

4. Druckkopf gemäß einem der Ansprüche 1 bis 3, **dadurch gekennzeichnet, dass** der erste Ausgang (30) in Form einer Mehrzahl von koaxialen, voneinander beabstandeten Einzelausgängen ausgestaltet ist und die Einzelausgänge so eingerichtet sind, dass durch jeden Einzelausgang aufgeschmolzenes oder nicht aufgeschmolzenes Aufbaumaterial (11, 12) mit der gleichen Austragsrate ausgetragen wird.

5. Druckkopf gemäß Anspruch 4, **dadurch gekennzeichnet, dass** die Einzelausgänge (30, 31) in zwei Dimensionen und zueinander versetzt angeordnet sind und dass der Abstand der Mittelpunkte zweier benachbarter Einzelausgänge kleiner oder gleich dem Durchmesser des zweiten Ausgangs (41) ist.

6. Druckkopf gemäß einem der Ansprüche 1 bis 5, **dadurch gekennzeichnet, dass** zusätzlich zum ersten Ausgang (30) wenigstens ein weiterer mit dem ersten Ausgang (30) koaxialer Ausgang (31) mit einem separat ansteuerbaren Austragsraten-Beeinflusser (63) vorgesehen ist, durch welchen aufgeschmolzenes Aufbaumaterial (14) mit einer Austragsrate ausgetragen werden kann.

7. Verfahren zur Herstellung eines Gegenstandes in einem additiven Schmelzschichtungsverfahren, umfassend die Schritte:
I) Auftragen eines Filaments eines zumindest teilweise geschmolzenen Aufbaumaterials mittels eines Druckkopfes auf einen Träger, so dass eine Lage des Aufbaumaterials erhalten wird, welche einem ersten ausgewählten Querschnitt des Gegenstands entspricht;
II) Auftragen eines Filaments des zumindest teilweise geschmolzenen Aufbaumaterials mittels eines Druckkopfes auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
III) Wiederholen des Schritts II), bis der Gegenstand gebildet ist;
wobei das Aufbaumaterial ein schmelzbares Polymer aufweist;
wobei das Auftragen des Filaments wenigstens in Schritt II) durch einen Druckkopf gemäß einem der Ansprüche 1 bis 6 erfolgt, indem geschmolzenes Aufbaumaterial mit einer ersten Austragsrate aus dem ersten Ausgang (30) des Druckkopfes ausgetragen wird;
vor, während und/oder nach der Durchführung eines Schrittes II) eine Steuereinheit kontrolliert, ob der Druckkopf ohne Austragen von geschmolzenem Aufbaumaterial repositioniert werden muss und, falls dieses der Fall ist, vor der Repositionierung den ersten Austragsraten-Beeinflusser (53) des Druckkopfs derart ansteuert, dass die erste Austragsrate Null beträgt und die zweite Austragsrate größer als Null ist und nach der Repositionierung den ersten Austragsraten-Beeinflusser (53) des Druckkopfs derart ansteuert, dass die erste Austragsrate größer als Null ist.

8. Verfahren gemäß Anspruch 7, wobei der Materialdurchsatz durch den Druckkopf für ≥ 50% der Gesamtzeit des Verfahrens konstant bleibt.

9. Verfahren gemäß Anspruch 7 oder 8, wobei , für ≥ 25% der Gesamtzeit des Verfahrens der durch das geschmolzene Aufbaumaterial (12) ausgeübte Druck innerhalb des Schmelzbereichs (20) um ≤ 50% vom durchschnittlichen durch das geschmolzene Aufbaumaterial (12) innerhalb des Schmelzbereichs (20) ausgeübten Druck abweicht.

10. Verfahren gemäß einem der Ansprüche 7 bis 9, wobei die mittlere Verweilzeit des geschmolzenen Aufbaumaterials (12) innerhalb des Schmelzbereichs (20) ≤ 3 Minuten beträgt.

11. Verfahren gemäß einem der Ansprüche 7 bis 10, wobei ein Druckkopf gemäß Anspruch eingesetzt wird und dass jeder Austragsraten-Beeinflusser separat angesteuert wird. 6

12. System für ein additives Schmelzschichtungsverfahren mit einem thermoplastischen Aufbaumaterial, umfassend einen Druckkopf (100) und eine Steuerungseinheit (600), wobei der Druckkopf (100) ein Druckkopf gemäß einem der Ansprüche 1 bis 6 ist und die Steuerungseinheit (600) eingerichtet ist, um ein Verfahren gemäß einem der Ansprüche 7 bis 11 ablaufen zu lassen.

## Claims

1. Printing head (100) for an additive melt layering process with a thermoplastic construction material, comprising:
- at least one inlet (10) for admitting a construction material (11) into the inside of the printing head;
- at least one melting region (20) arranged downstream of the inlet (10) and at least intermittently fluidically connected to the inlet (10) for melting the construction material (11);
and
- at least one first outlet (30) at least intermittently fluidically connected to the melting region (20) for discharging molten construction material (12) from the melting region (20) at a first discharge rate;
wherein
- the printing head (100) further comprises at least one second outlet (41) at least intermittently fluidically connected to the melting region (20) for discharging molten or unmolten construction material (11, 13) from the melting region (20) at a second discharge rate;
- the first discharge rate can be influenced by a first discharge rate influencer for the molten construction material (12); **characterized in that**
- the first discharge rate influencer is a switchable valve (53) adapted for fluidically connecting to one another or separating from one another the melting region (20) and the first outlet (30).

2. Printing head according to Claim 1, **characterized in that** the second discharge rate can be influenced by a second discharge rate influencer for the molten construction material (13), wherein the second discharge rate influencer is a switchable valve (61) adapted for fluidically connecting to one another or separating from one another the melting region (20) and the second outlet (41) .

3. Printing head according to Claim 1 or 2, **characterized in that** the second outlet (41) is at least intermittently fluidically connected to the inlet (10).

4. Printing head according to any of Claims 1 to 3, **characterized in that** the first outlet (30) is in the form of a plurality of coaxial individual outlets spaced apart from one another and the individual outlets are adapted such that molten or unmolten construction material (11, 12) is discharged through each individual outlet at the same discharge rate.

5. Printing head according to Claim 4, **characterized in that** the individual outlets (30, 31) are arranged in two dimensions and offset with respect to one another and **in that** the distance between the centers of two neighboring individual outlets is less than or equal to the diameter of the second outlet (41).

6. Printing head according to any of Claims 1 to 5, **characterized in that** there is provided in addition to the first outlet (30) at least one further outlet (31) coaxial with the first outlet (30) having a separately controllable discharge rate influencer (63) through which molten construction material (14) may be discharged at a discharge rate.

7. Process for producing an article in an additive melt layering process, comprising the steps of:
I) applying a filament of an at least partially molten construction material to a carrier using a printing head to obtain a layer of the construction material which corresponds to a first selected cross section of the article;
II) applying a filament of the at least partially molten construction material to a previously applied layer of the construction material using a printing head to obtain a further layer of the construction material which corresponds to a further selected cross section of the article and which is joined to the previously applied layer;
III) repeating step II) until the article is formed; wherein the construction material comprises a meltable polymer;
wherein
the applying of the filament at least in step II) is carried out by means of a printing head according to any of Claims 1 to 6 by discharging molten construction material from the first outlet (30) of the printing head at a first discharge rate;
before, during and/or after performing a step II) a control unit controls whether the printing head requires repositioning without discharging of molten construction material and, if this is the case, before repositioning controls the first discharge rate influencer (53) of the printing head such that the first discharge rate is zero and the second discharge rate is greater than zero and after repositioning controls the first discharge rate influencer (53) of the printing head such that the first discharge rate is greater than zero.

8. Process according to Claim 7, wherein the material throughput through the printing head remains constant for ≥ 50% of the total duration of the process.

9. Process according to Claim 7 or 8, wherein the pressure inside the melting region (20) exerted by the molten construction material (12) deviates from the average pressure exerted by the molten construction material (12) inside the melting region (20) by ≤ 50% for ≥ 25% of the total duration of the process.

10. Process according to any of Claims 7 to 9, wherein the average residence time of the molten construction material (12) inside the melting region (20) is ≤ 3 minutes.

11. Process according to any of Claims 7 to 10, wherein a printing head according to Claim 6 is employed and in that each discharge rate influencer is controlled separately.

12. System for an additive melt layering process with a thermoplastic construction material, comprising a printing head (100) and a control unit (600),
wherein
the printing head (100) is a printing head according to any of Claims 1 to 6 and the control unit (600) is adapted for executing a process according to any of Claims 7 to 11.

## Revendications

1. Tête d'impression (100) pour un procédé additif de dépôt de filament en fusion avec une matière de construction thermoplastique, comportant :
- au moins une entrée (10) pour la réception d'une matière de construction (11) dans la tête d'impression ;
- au moins une zone de fusion (20) disposée en aval de l'entrée (10) et reliée fluidiquement au moins par intermittence à l'entrée (10) pour la fusion de la matière de construction (11) ;
et
- au moins une première sortie (30) reliée fluidiquement au moins par intermittence à la zone de fusion (20) pour l'évacuation de matière de construction fondue (12) à une première vitesse d'évacuation hors de la zone de fusion (20) ;
- la tête d'impression (100) comportant en outre au moins une deuxième sortie (41) reliée fluidiquement au moins par intermittence à la zone de fusion (20) pour l'évacuation de matière de construction (11, 13) fondue ou non fondue à une deuxième vitesse d'évacuation hors de la zone de fusion (20) ;
- la première vitesse d'évacuation pouvant être influencée par un premier dispositif influenceur de vitesses d'évacuation pour la matière de construction fondue (12) ; **caractérisée en ce que**
- le premier dispositif influenceur de vitesses d'évacuation est réalisé en tant que soupape commutable (53), laquelle est conçue pour relier l'une à l'autre ou séparer l'une de l'autre fluidiquement la zone de fusion (20) et la première sortie (30).

2. Tête d'impression selon la revendication 1, **caractérisée en ce que** la deuxième vitesse d'évacuation peut être influencée par un deuxième dispositif influenceur de vitesses d'évacuation pour la matière de construction fondue (13), le deuxième dispositif influenceur de vitesses d'évacuation étant réalisé en tant que soupape commutable (61), laquelle est conçue pour relier l'une à l'autre ou séparer l'une de l'autre fluidiquement la zone de fusion (20) et la deuxième sortie (41).

3. Tête d'impression selon la revendication 1 ou 2, **caractérisée en ce que** la deuxième sortie (41) est reliée fluidiquement à l'entrée (10) au moins par intermittence.

4. Tête d'impression selon l'une des revendications 1 à 3, **caractérisée en ce que** la première sortie (30) est configurée sous la forme d'une pluralité de sorties individuelles coaxiales espacées les unes des autres et les sorties individuelles sont conçues de telle sorte que la matière de construction (11, 12) fondue ou non fondue est évacuée à la même vitesse d'évacuation à travers chaque sortie individuelle.

5. Tête d'impression selon la revendication 4, **caractérisée en ce que** les sorties individuelles (30, 31) sont disposés en deux dimensions et de manière décalée les unes par rapport aux autres, et **en ce que** la distance des centres de deux sorties individuelles adjacentes est inférieure ou égale au diamètre de la deuxième sortie (41) .

6. Tête d'impression selon l'une des revendications 1 à 5, **caractérisée en ce qu'**en plus de la première sortie (30), au moins une autre sortie (31) coaxiale à la première sortie (30) et dotée d'un dispositif influenceur de vitesses d'évacuation (63) pouvant être commandé séparément est prévue, autre sortie à travers laquelle de la matière de construction fondue (14) peut être évacuée à une vitesse d'évacuation.

7. Procédé de fabrication d'un objet suivant un procédé additif de dépôt de filament en fusion, comportant les étapes de :
I) application d'un filament de matière de construction au moins partiellement fondue au moyen d'une tête d'impression sur un support, de sorte qu'une couche de matière de construction soit obtenue, laquelle couche correspond à une première section transversale sélectionnée de l'objet ;
II) application d'un filament de matière de construction au moins partiellement fondue au moyen d'une tête d'impression sur une couche de matière de construction préalablement appliquée, de sorte qu'une autre couche de matière de construction soit obtenue, laquelle autre couche correspond à une autre section transversale sélectionnée de l'objet et laquelle est reliée à la couche préalablement appliquée ;
III) répétitions de l'étape II) jusqu'à ce que l'objet soit formé ;
la matière de construction comprenant un polymère fusible ;
l'application du filament au moins à l'étape II) s'effectuant au moyen d'une tête d'impression selon l'une des revendications 1 à 6, par le fait que la matière de construction fondue est évacuée à une première vitesse d'évacuation hors de la première sortie (30) de la tête d'impression ;
avant, pendant et/ou après la mise en œuvre d'une étape II), une unité de commande contrôlant si la tête d'impression doit être repositionnée sans évacuation de matière de construction fondue, et, si tel est le cas, commandant le premier dispositif influenceur de vitesses d'évacuation (53) de la tête d'impression avant le repositionnement, de telle sorte que la première vitesse d'évacuation soit égale à zéro et que la deuxième vitesse d'évacuation soit supérieure à zéro, et commandant le premier dispositif influenceur de vitesses d'évacuation (53) de la tête d'impression après le repositionnement, de telle sorte que la première vitesse d'évacuation soit supérieure à zéro

8. Procédé selon la revendication 7, dans lequel le débit de matière à travers la tête d'impression demeure constant pendant ≥ 50 % de la durée totale du procédé.

9. Procédé selon la revendication 7 ou 8, dans lequel pendant ≥ 25 % de la durée totale du procédé, la pression exercée par la matière de construction fondue (12) à l'intérieur de la zone de fusion (20) diffère de ≤ 50 % de la pression moyenne exercée par la matière de construction fondue (12) à l'intérieur de la zone de fusion (20).

10. Procédé selon l'une des revendications 7 à 9, dans lequel le temps de séjour moyen de la matière de construction fondue (12) à l'intérieur de la zone de fusion (20) est ≤ 3 minutes.

11. Procédé selon l'une des revendications 7 à 10, dans lequel une tête d'impression selon la revendication 6 est utilisée et en ce que chaque dispositif influenceur de vitesses d'évacuation est commandé séparément.

12. Système pour un procédé additif de dépôt de filament en fusion avec une matière de construction thermoplastique, comportant une tête d'impression (100) et une unité de commande (600),
dans lequel la tête d'impression (100) est une tête d'impression selon l'une des revendications 1 à 6 et l'unité de commande (600) est conçue pour qu'un procédé selon l'une des revendications 7 à 11 puisse se dérouler.
